# EUROPÄISCHE PATENTANMELDUNG

(11) **EP 2 143 547 A2**
(43) Veröffentlichungstag der Anmeldung: **13.01.2010**
(21) Anmeldenummer: 09164848.5
(22) Anmeldetag: 08.07.2009
(51) Int. Cl.: B29C 49/78

(54) **Vorrichtung zum Expandieren von Vorformlingen zu Kunststoffbehältnissen mit Temperaturerfassung**

(30) Priorität: 08.07.2008 DE 102008032121
(71) Anmelder: Krones AG, 93073 Neutraubling (DE)
(72) Erfinder: Ziegler, Manfred, 94161, Ruderting (DE)
(74) Vertreter: Bittner, Bernhard

(57) **Zusammenfassung**

Eine Vorrichtung (10) zum Expandieren von Vorformlingen zu Kunststoffbehältnissen mit einer Blasform (1), innerhalb der die Vorformlinge expandierbar sind, wobei die Blasform eine Innenwandung (2) mit einer Kontur des zu erzeugenden Behältnisses aufweist, und mit wenigstens einer Temperaturmesseinrichtung (6a, 6b, 6c), welche eine Temperatur wenigstens eines Bereiches der Blasform (1) misst. Erfindungsgemäß steht die Temperaturmesseinrichtung (6a, 6b, 6c) in Kommunikationsverbindung mit einer an der Blasform angeordneten Sendeeinrichtung (8a, 8b, 8c) steht, welche derart gestaltet ist, dass sie ein für die Temperatur des Bereiches charakteristisches Signal drahtlos an eine getrennt von der Blasform (1) angeordnete Empfangseinrichtung (12a, 12b, 12c) übermittelt.

## Beschreibung

Die vorliegende Erfindung bezieht sich auf eine Erfindung zum Expandieren von Vorformlingen zu Kunststoffbehältnissen. Aus dem Stand der Technik sind derartige Vorrichtungen bekannt. Diese Vorrichtungen dienen dazu, um Kunststoffvorformlinge, üblicherweise mittels Luftdruck, zu Kunststoffbehältnissen, beispielsweise PET-Flaschen, zu expandieren. Dazu werden die Kunststoffvorformlinge in eine Blasform eingelegt und gegenüber dieser Blasform expandiert. Bei einigen dieser Verfahren ist dabei auch die Temperatur der entsprechenden Blasformen von entscheidender Bedeutung, beispielsweise wenn die Kunststoffvorformlinge auch termisch behandelt werden.

Aus diesem Grunde ist es nötig, die Temperatur der entsprechenden Blasformen zu bestimmen. Im Stand der Technik ist es üblich, die Temperatur derartiger Blasformen mit Hilfe von mehreren Temperatursensoren, beispielsweise so genannter PT 100, zu messen. Diese Temperaturfühler sind dabei üblicherweise von außen fest verdrahtet. Dabei ist eine einzelne Blasstation beziehungsweise Blasform mit mehreren Temperaturfühlern in der Blasform und im Bodenstück ausgestattet. Aufgrund der Drahtzuführungen kommt es jedoch relativ häufig zu einem Drahtbruch in den Messfühlern aufgrund der schnellen Bewegung der Blasformen insbesondere während des Öffnens und Schließens derselben.

Der vorliegenden Erfindung liegt die Aufgabe zugrunde, eine Vorrichtung zum Expandieren von Kunststoffbehältnissen zu schaffen, welche eine Temperaturabfragung in den Blasstationen, insbesondere auch während der Produktion, erlaubt. Dabei soll die Systemsicherheit gegenüber den aus dem Stand der Technik bekannten Lösungen erhöht werden. Die Temperaturabfrage geschieht entweder permanent, zyklisch, getaktet oder winkeltreu.

Dies wird erfindungsgemäß durch eine Vorrichtung nach Anspruch 1 und ein Verfahren nach Anspruch 10 erreicht. Vorteilhafte Ausführungsformen und Weiterbildungen sind Gegenstand der Unteransprüche.

Eine erfindungsgemäße Vorrichtung zum Expandieren von Vorformlingen zu Kunststoffbehältnissen weist eine Blasform auf, innerhalb der die Vorformlinge expandierbar sind, wobei die Blasform eine Innenwandung mit einer Kontur des zu erzeugenden Behältnisses aufweist. Weiterhin weist die Vorrichtung wenigstens eine Temperaturmesseinrichtung auf, welche wenigstens eine Temperatur wenigstens eines Bereichs dieser Blasform misst. Erfindungsgemäß steht die Temperaturmesseinrichtung in Kommunikationsverbindung mit einer an der Blasform angeordneten Sendeeinrichtung, welche derart gestaltet ist, dass sie ein für die Temperatur des Bereichs charakteristisches Signal drahtlos an eine getrennt von der Blasform angeordnete Empfangseinrichtung übermittelt. Die vorliegende Erfindung ist dabei grundsätzlich auf unterschiedlichste Vorrichtungen zum Expandieren von Kunststoffbehältnissen anwendbar, wie insbesondere aber nicht ausschließlich auch auf Streckblasmaschinen.

Bei der Kommunikationsverbindung zwischen der Temperaturmesseinrichtung und der Sendeeinrichtung handelt es sich insbesondere um eine oder mehrere elektrische Leitungen.

Es wäre auch möglich, die Temperaturmesseinrichtung und die Sendeeinrichtung auf einem gemeinsamen Träger anzuordnen, beispielsweise, wenn die Temperatur an einer Oberfläche gemessen werden sollen. Bei der Sendeeinrichtung handelt es sich bevorzugt um eine Antenne.

Es wird damit erfindungsgemäß vorgeschlagen, dass Temperatursignal drahtlos an eine Empfangseinrichtung zu übertragen. Auf diese Weise kann auf die sensiblen Anschlusskabel für die Temperaturmesser verzichtet werden.

Bei einer bevorzugten Ausführungsform ist der Sendeeinrichtung eine RFID-Kommunikationseinheit zugeordnet. Dies bedeutet, dass die Ausgabe des Temperaturwertes drahtlos und insbesondere über ein RFID-Kommunikationssignal erfolgt.

Die RFID (Radio-frequency identification) - Technologie ist besonders geeignet für die hier vorliegenden kurzen Übertragungsstrecken der gemessenen Temperaturwerte bzw. hieraus abgeleiteter Signale.

Bei einer weiteren bevorzugten Ausführungsform weist die Temperaturmesseinrichtung einen SAW (surface accoustic wave) -Sensor auf. Ein derartiger SAW-Sensor bzw. Transponder besteht aus einem piezoelektrischen Substratkristall, auf den metallische Strukturen aufgebracht werden. Dieser SAW-Sensor bzw. Transponder steht über eine Antenne, welche damit als Sendeeinrichtung fungiert, mit einem Sende- und Lesegerät in Verbindung. In dieser bevorzugten Ausführungsform ist es möglich, dass die Sendeeinrichtung sowie die Temperaturmesseinrichtung ohne eigene Stromquelle betrieben werden sondern von der Sende -bzw. Empfangseinheit auch mit Energie über die Antenne (d.h. die Sendeeinrichtung) versorgt werden.

Genauer gesagt gibt die Empfangseinrichtung zunächst ein elektromagnetisches Signal aus, dass von der Antenne des RFID-Transponders empfangen wird. Dieses Signal wird durch einen speziellen Wandler, der sich auf dem SAW-Sensor befindet, in mechanische Schwingungen umgesetzt. Die daraus resultieren Wellen breiten sich auf der Oberfläche des piezoelektrischen Kristalls aus. An Reflektoren werden die Oberflächenwellen teilweise reflektiert und wieder in elektromagnetische Wellen zurückgewandelt.

Da sich der besagte Kristall temperaturabhängig ausdehnt oder zusammenzieht führt dies zu einer Laufzeitänderung des empfangenen Signals. Auf diese Weise ist eine Temperaturbestimmung möglich. Damit lässt sich einerseits eine kabellose Temperaturmessung erreichen und andererseits ist auch eine Funkidentifikation des Sensors möglich. Diese Technologie erlaubt eine hohe Reichweite insbesondere auch auf metallischen Oberflächen und bei Verwendung von Schlitzantennen. Weiterhin ist auch ein Funkbetrieb mit speziell abgestimmten Transpondern möchlich. Die bevorzugt zu verwendenden Transponder arbeiten unter erheblicher Belastung insbesondere auch extremen Temperaturen und innerhalb von starken elektrischen oder magnetischen Feldern oder unter Strahlenbelastung.

Bei einer bevorzugten Ausführungsform ist die Sendeinrichtung, d.h. die Antenne von der Temperaturmesseinrichtung beabstandet. Insbesondere ist dabei die Sendeeinrichtung an einem Bereich der Oberfläche insbesondere der äußeren Oberfläche der Blasform angebracht, wohingegen die eigentliche Temperaturmesseinrichtung auch im inneren der Wandung der Blasform angeordnet sein kann. Auf diese Weise ist es möglich, prinzipiell in allen Bereichen der Blasform Temperaturen zu bestimmen.

Bei einer weiteren bevorzugten Ausführungsform ist eine Vielzahl von Temperaturmesseinrichtungen und diesen zugeordneten Sendeeinrichtungen vorgesehen, wobei zumindest diese Sendeeinrichtungen an unterschiedlichen Bereichen der Blasform angeordnet sind. Auf diese Weise können von mehreren Empfangseinrichtungen die Signale mehrerer Sendeeinrichtungen und damit auch die Temperaturwerte mehrerer unterschiedlicher Temperaturmesseinrichtungen aufgenommen werden. Auch in diesem Fall ist die Verwendung so genannter SAW (Surface Accustic Wave) Sensoren besonders geeignet. Vorzugsweise gibt dabei die Sendeeinrichtung sowohl einen für die Temperatur charakteristischen Wert als auch eine eindeutig identifizierbare Adresse bzw. eine Funkidentifikations - Adresse aus, welche die Sendeeinrichtung eindeutig identifiziert.

Bei einer weiteren vorteilhaften Ausführungsform weist die Vorrichtung eine Transporteinrichtung auf, welche die Blasform entlang eines vorgegebenen Transportpfades transportiert.

Die Auslesung der Temperaturwerte kann dabei entlang wenigstens eines Bereichs dieses Transportpfades vorgenommen werden.

Vorzugsweise weist die Vorrichtung auch mehrere Empfangseinrichtungen auf, welche an unterschiedlichen Positionen bezüglich des Transportpfades der Blasform angeordnet sind. Dabei ist die Position der einzelnen Empfangseinrichtungen besonders bevorzugt derart gewählt, dass von jeder Empfangseinrichtung jeweils nur das Signal genau einer Sendeeinrichtung empfangbar ist. Bevorzugt ist dieses Signal empfangbar, während sich die Blasform in einem bestimmten Abschnitt ihres Transportpfades befindet. Dabei ist jedoch vorzugsweise sichergestellt, dass unabhängig von der Position der Blasform keine Signale anderer Sendeeinrichtungen bzw. Antennen aufgenommen werden.

Umgekehrt ist die Anordnung der Empfangseinrichtung derart gewählt, dass von einer bestimmten Empfangseinrichtung nur genau eine Sendeeinrichtung erreicht wird, bzw. nur ein Temperatursensor angesprochen wird.

Es ist beispielsweise möglich, die Blasform entlang einer kreisförmigen Bahn zu bewegen und eine Empfangseinrichtung innerhalb dieser Kreisbahn vorzusehen eine weitere Empfangseinrichtung außerhalb dieser Kreisbahn und eine weitere Empfangseinrichtung unterhalb dieser Kreisbahn. Auf diese Weise kann sichergestellt werden, dass bei entsprechender Anordnung der Sendeeinrichtung jede Empfangseinrichtung nur genau das Signal einer Sendeeinrichtung empfängt. Vorzugsweise sind die Empfangseinrichtungen stationär angeordnet.

Bei einer weiteren bevorzugten Ausführungsform ist wenigstens eine Sendeeinrichtung durch eine getrennt von der Blasform angeordnete Energievorsorgungseinheit drahtlos mit Energie versorg bar. Vorzugsweise handelt es sich bei dieser Engergieversorgungseinheit auch um die Empfangseinrichtung, welche gleichzeitig mit dem Abfragesignal der Sendeeinrichtung und auch der Temperaturmesseinrichtung Energie zuführt. Auch aus diesem Grund ist die RFID - Technologie für die hier beschriebene Erfindung besonders geeignet.

Die vorliegende Erfindung ist weiterhin auf ein Verfahren zum Expandieren von Vorformlingen zu Kunststoffbehältnissen gerichtet, wobei in einem Verfahrensschritt ein Vorformling innerhalb einer Blasform angeordnet wird und dieser Vorformling gegen eine Innenwandung der Blasform expandiert wird, wobei die Innenwandung an eine Kontur des zu erzeugenden Kunststoffbehältnisses angepasst ist. In einem weiteren Verfahrensschritt wird eine Temperatur eines Bereichs der Innenwandung mit einer Temperaturmesseinrichtung bestimmt. Erfindungsgemäß steht die Temperaturmesseinrichtung in Kommunikation bzw. in Kommunikationsverbindung mit einer an der Blasform angeordneten Sendeeinrichtung und diese Sendeeinrichtung gibt ein für eine gemessene Temperatur charakteristisches Signal drahtlos an eine getrennt von der Blasform angeordnete Empfangseinrichtung aus. Vorzugsweise ist dabei diese Empfangseinrichtung stationär angeordnet und die Blasform bewegt sich.

Vorzugsweise gibt die Sendeeinrichtung ein Signal an die Empfangseinrichtung aus, welches die Sendeeinrichtung identifiziert. Damit werden auch hier so genannte RFID-Tags eingesetzt, -welche sich (eindeutig) identifizieren lassen.

Bei einem weiteren vorteilhaften Verfahren geben mehrere Sendeeinrichtungen charakteristische Signale an mehrere Empfangseinrichtungen aus, wobei jede Empfangseinrichtung genau ein Signal einer Sendeeinrichtung aufnimmt. Auf diese Weise kann sichergestellt werden, dass die einzelnen Temperaturwerte jeweils bestimmten Positionen innerhalb der Blasform zugeordnet werden können.

Weitere vorteilhafte Ausführungsformen ergeben sich aus den beigefügten Zeichnungen:
Darin zeigen:
   - Fig. 1: eine erfindungsgemäße Vorrichtung in einer perspektivischen Ansicht;
   - Fig. 2: die Vorrichtung aus Fig. 1 in einer Schnittdarstellung; und
   - Fig. 3: zwei Ansichten eines Details der Vorrichtung aus Fig. 1.

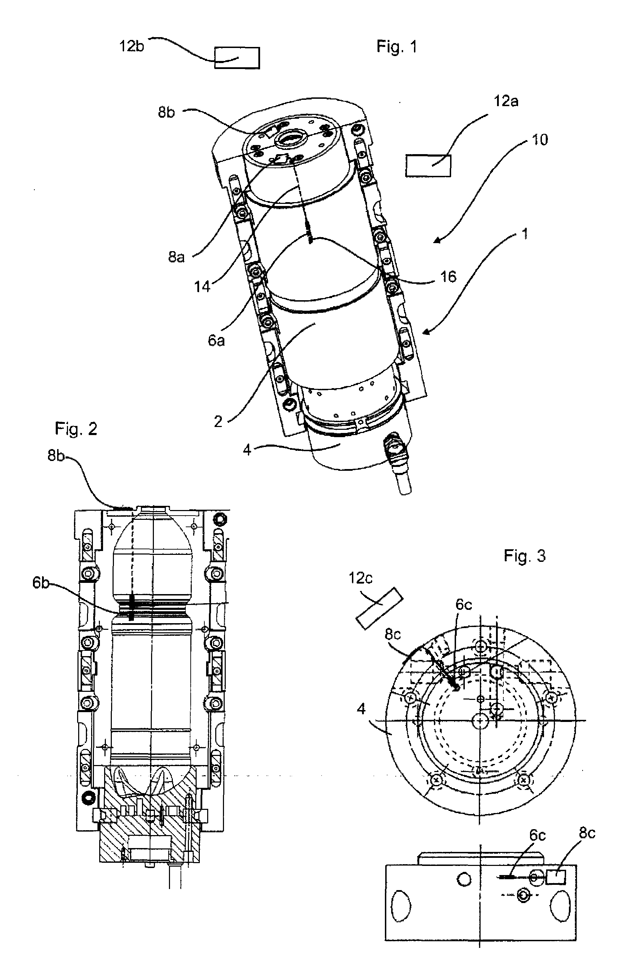

Fig. 1 zeigt eine erfindungsgemäße Vorrichtung 10. Dabei bezieht sich das Bezugszeichen 1 auf eine aufklappbare Blasform, in deren Innenraum ein Vorfomling zu einem Behältnis expandiert werden kann. In Fig. 1 ist dabei eine Temperaturmesseinrichtung 6a angedeutet, die im Inneren einer Wandung 2 der Blasform 1 angeordnet ist.

Diese Temperaturmesseinrichtung 6a, die gemeinsam mit einem RFID - Tag 16 ausgeführt ist, steht dabei über eine Verbindungsleitung 14 in Verbindung mit einer Sendeeinrichtung 8a, genauer einer Antenne 8a. Das Bezugszeichen 12a bezieht sich auf eine sowohl hinsichtlich ihrer Ausgestaltung als auch hinsichtlich ihrer Position nur schematisch dargestellte Empfangseinrichtung, welche der Sendeeinrichtung 8a und damit auch der Temperaturmesseinrichtung 6a zugeordnet ist. Zur Abfrage eines Temperaturwerts sendet die Empfangseinrichtung ein Signal an die Sendeeinrichtung 8a, welches gleichzeitig den RFID - Tag 16 mit Energie versorgt. Umgekehrt gibt die Sendeeinrichtung 8a ein für diesen Temperaturwert charakteristisches Signal an die Empfangseinrichtung 12a aus. Das Bezugszeichen 12b bezieht sich auf eine weitere Empfangseinrichtung, welche ein Signal der Sendeeinrichtung 8b misst.

Fig. 2 zeigt eine Schnittdarstellung der in Fig. 1 gezeigten Vorrichtung. Man erkennt, dass hier die Temperaturmesseinrichtung 6b im Inneren der Wandung 2 der Blasform 1 angeordnet ist und die Sendeeinrichtung 8b auf einer oberen Oberfläche der Blasform 1.

Fig. 3 zeigt ein weiteres Detail der Blasform 1, nämlich deren Bodenteil 4. Auch in diesem Bodenteil 4 ist eine Temperaturmesseinrichtung 6c angeordnet, welche die Temperatur dieses Bodenteils 4 misst und in Verbindung mit einer weiteren Sendeeinrichtung 8c steht. Diese Sendeeinrichtung gibt ein für die Temperatur charakteristisches Signal, bevorzugt gemeinsam mit einem Identifikationssignal für die Temperaturmesseinrichtung 8c bzw. des RFID - Tags an eine weitere Empfangseinrichtung 12c aus.

Neben den gezeigten drei Temperaturmesseinrichtungen könnten auch noch weitere Temperaturmesseinrichtungen gemeinsam mit diesen zugeordneten Sende- und Empfangseinrichtungen vorgesehen sein. Es wird darauf hingewiesen, dass die Empfangseinrichtungen 12a, 12b, 12c auch als Sendeeinrichtungen fungieren, in dem sie ein Abfragesignal an die Sendeeinrichtungen 8a, 8b, 8c übermitteln. Insoweit fungieren die Sendeeinrichtungen 8a, 8b, 8c gleichzeitig auch als Empfangseinrichtungen.

Sämtliche in den Anmeldungsunterlagen offenbarten Merkmale werden als erfindungswesentlich beansprucht, sofern sie einzeln oder in Kombination gegenüber dem Stand der Technik neu sind.

## Patentansprüche

1. Vorrichtung (10) zum Expandieren von Vorformlingen zu Kunststoffbehältnissen mit einer Blasform (1), innerhalb der die Vorformlinge expandierbar sind, wobei die Blasform eine Innenwandung (2) mit einer Kontur des zu erzeugenden Behältnisses aufweist, und mit wenigstens einer Temperaturmesseinrichtung (6a, 6b, 6c), welche eine Temperatur wenigstens eines Bereiches der Blasform (1) misst,
**dadurch gekennzeichnet, dass**
die Temperaturmesseinrichtung (6a, 6b, 6c) in Kommunikationsverbindung mit einer an der Blasform angeordneten Sendeeinrichtung (8a, 8b, 8c) steht, welche derart gestaltet ist, dass sie ein für die Temperatur des Bereiches charakteristisches Signal drahtlos an eine getrennt von der Blasform (1) angeordnete Empfangseinrichtung (12a, 12b, 12c) übermittelt.

2. Vorrichtung (10) nach Anspruch 1,
**dadurch gekennzeichnet, dass** der Sendeeinrichtung (8a, 8b, 8c) eine RFID Kommunikationseinheit (16) zugeordnet ist.

3. Vorrichtung (10) nach wenigstens einem der vorangegangenen Ansprüche,
**dadurch gekennzeichnet, dass**
die Temperaturmesseinrichtung (6a, 6b, 6c) einen SAW - Sensor aufweist.

4. Vorrichtung (10) nach wenigstens einem der vorangegangenen Ansprüche,
**dadurch gekennzeichnet, dass**
die Sendeeinrichtung (8a, 8b, 8c) von der Temperaturmesseinrichtung (6a, 6b, 6c) beabstandet ist.

5. Vorrichtung (10) nach wenigstens einem der vorangegangenen Ansprüche,
**dadurch gekennzeichnet, dass**
die Blasform (1) eine Vielzahl von Temperaturmesseinrichtungen (6a, 6b, 6c) und diesen zugeordnete Sendeeinrichtungen (8a, 8b, 8c) aufweist, wobei diese Sendeeinrichtungen (8a, 8b, 8c) an unterschiedlichen Bereichen der Blasform (1) angeordnet sind.

6. Vorrichtung (10) nach wenigstens einem der vorangegangenen Ansprüche,
**dadurch gekennzeichnet, dass**
die Vorrichtung (10) eine Transporteinrichtung aufweist, welche die Blasform (1) entlang eines vorgegebenen Transportpfades transportiert.

7. Vorrichtung (10) nach Anspruch 6,
**dadurch gekennzeichnet, dass**
die Vorrichtung (10) mehrere Empfangseinrichtungen (12a, 12b, 12c) aufweist, welche an unterschiedlichen Positionen bezüglich des Transportpfades der Blasform (1) angeordnet sind.

8. Vorrichtung (10) nach Anspruch 7,
**dadurch gekennzeichnet, dass**
die Empfangseinrichtungen (12a, 12b, 12c) derart angeordnet sind, das von jeder Empfangseinrichtung jeweils nur das Signal genau einer Sendeeinrichtung (8a. 8b, 8c) empfangbar ist.

9. Vorrichtung (1) nach wenigstens einem der vorangegangenen Ansprüche,
**dadurch gekennzeichnet, dass**
wenigstens eine Temperaturmesseinrichtung (6a, 6b, 6c) durch eine getrennt von der Blasform (1) angeordnete Energieversorgungseinheit (12) drahtlos mit Energie versorgbar ist.

10. Verfahren zum Expandieren von Vorformlingen zu Kunststoffbehältnissen, mit den Schritten:
- Anordnen eines Vorformlings innerhalb einer Blasform (1) und Expandieren dieses
Vorformlings gegen eine Innenwandung der Blasform (1), wobei die Innenwandung
an eine Kontur des zu erzeugenden Kunststoffbehältnisses angepasst ist;
- Messung einer Temperatur eines Bereichs der Wandung (2) der Blasform (1) mit einer Temperaturmesseinrichtung (6a, 6b, 6c)
**dadurch gekennzeichnet, dass**
die Temperaturmesseinrichtung (6a, 6b, 6c) in Kommunikation mit einer an der Blasform (1) angeordneten Sendeeinrichtung (8a, 8b, 8c) steht und diese Sendeeinrichtung (8a, 8b, 8c) ein für eine gemessene Temperatur charakteristisches Signal drahtlos an eine getrennt von der Blasform angeordnete Empfangseinrichtung (12a, 12b, 12c) ausgibt.

11. Verfahren nach Anspruch 10,
**dadurch gekennzeichnet, dass**
die Sendeeinrichtung (8a, 8b, 8c) ein Signal an die Empfangseinrichtung (12a, 12b, 12c) ausgibt, welches die Sendeeinrichtung (8a, 8b, 8c) identifiziert.

12. Verfahren nach wenigstens einem der vorangegangenen Ansprüche,
**dadurch gekennzeichnet, dass**
mehrere Sendeeinrichtungen (8a, 8b, 8c) charakteristische Signale an mehrere Empfangseinrichtungen (12a, 12b, 12c) abgeben, wobei jede Empfangseinrichtung (12a, 12b, 12c) genau ein Signal einer Sendeeinrichtung (8a, 8b, 8c) aufnimmt.
